# EUROPEAN PATENT SPECIFICATION

(11) **EP 4 533 012 B1**
(45) Date of publication and mention of the grant of the patent: **29.04.2026**
(21) Application number: 23728593.7
(22) Date of filing: 25.05.2023
(51) Int. Cl.: F26B 23/00, F28C 3/06

(54) **METHOD FOR RECOVERING HEAT FROM A DRYING DEVICE FOR BUILDING BOARDS**
VERFAHREN ZUR WÄRMERÜCKGEWINNUNG AUS EINER TROCKNUNGSVORRICHTUNG FÜR BAUPLATTEN
PROCÉDÉ DE RÉCUPÉRATION DE CHALEUR À PARTIR D'UN DISPOSITIF DE SÉCHAGE POUR PANNEAUX DE CONSTRUCTION

(30) Priority: 25.05.2022 EP 22000139
(43) Date of publication of application: 09.04.2025
(73) Proprietor: Knauf Gips KG, 97346 Iphofen (DE)
(72) Inventor: WINTRICH, Hans, 97355 Castell (DE); SCHÜSSLER, Dominik, 97318 Kitzingen (DE)
(74) Representative: Meissner Bolte Partnerschaft mbB
(86) International application number: PCT/EP2023/025243
(87) International publication number: WO 2023/227245

(56) References cited:
- EP-A1- 0 385 372
- EP-B1- 3 717 851
- DE-A1- 102013 102 795
- DE-C- 405 274
- DE-U1- 202009 017 286
- FR-A2- 2 476 817
- US-A- 2 722 752
- US-A1- 2020 318 903

## Description

The invention relates to a method for recovering heat, i.e. thermal energy, from a drying device for building boards, preferably gypsum-based or cementitious building boards, in particular plasterboards.

There are two processes in the production of building boards that consume high amounts of energy: the calcination of the raw material (e.g. gypsum or limestone) prior to forming the boards and drying the freshly formed boards.

Various building boards, such as gypsum-based building boards, e.g. gypsum fibreboards or plasterboards, or cementitious building boards, e.g. cement fibreboards, are typically produced in a continuous process. The finished boards generally have a thickness of 6 mm to 60 mm and can have planar dimensions of up to approximately 1.5 m by 3 m, for example. During the production, an endless sheet with a width of up to 3 m can be produced. Depending on the dryer, this endless sheet can be cut to a length of 2 m to 4 m for the drying process. The production processes of e.g. gypsum fibreboards can differ from the production processes of e.g. plasterboards, but both examples have in common that stucco (calcium sulphate hemihydrate) is mixed with water and additives to form a slurry. The slurry is spread onto a web to form a large sheet. Once the e.g. stucco slurry has set to a certain degree and enough gypsum (calcium sulphate dihydrate) has formed, the boards acquire their shape and can be cut to size. Cementitious building boards, such as e.g. cement fibreboards, can be formed similarly. The building boards then pass through a drying device, where the setting can be completed and excess water is evaporated. Water is usually evaporated by convective heating, where hot air passes along the surface of the board and removes the water vapor. Other building boards, particularly other dry-lining building boards, such as e.g. clay-based building boards, which may be produced in a batch process, frequently also comprise a drying step in a drying device.

A typical drying device for building boards comprises several drying units, often three units, namely a pre-drying (or pre-warming) unit, a main (or hot) drying unit and a final drying unit, wherein the pre-drying unit is the most upstream unit and the final drying unit is the most downstream unit of the drying device. The temperature of the pre-drying unit is typically set to a temperature below that of the main drying unit. Similarly, the temperature of the final drying unit can also be set to a temperature below that of the main drying unit. Each unit can have one or more drying zones. The pre-drying unit (i.e. the first drying zone or the first drying zones) is configured to moderately increase the temperature of the board to initiate evaporation of water from the board before entering the main drying unit. The main drying unit (i.e. the subsequent zones) is configured to evaporate moisture from the board and thereby dry the board. The final unit is configured to finish the drying process while simultaneously avoiding calcining the outermost layers of the board. Each unit is typically assigned a temperature range. For example, the pre-drying unit can have a temperature range of 40°C to 180°C, preferably e.g. 70°C to 150°C. Alternatively, it can be supplied with heated air of 70°C to 180°C. This heated or hot air can originate from one or more drying zones, preferably one or more drying zones of the main drying unit. As an example, the main drying unit can have a temperature range of 100°C to 330°C, preferably e.g. 100°C to 300°C, more preferably e.g. 200°C to 280°C. Alternatively, it can be supplied with heated air of 180°C to 330°C. The final unit can have a temperature range of e.g. 50°C to 180°C, preferably e.g. 100°C to 180°C. Alternatively, it can be supplied with heated air of e.g. 80°C to 180°C. The temperature in each drying unit can be constant and/or it can follow a defined temperature profile within the respective temperature range. A drying unit can typically comprise 1 to 60 drying zones having transverse ventilation or 1 to 5 drying zones having longitudinal ventilation or a combination of drying zones having longitudinal and transverse ventilation. The number of drying zones generally depends on the type of ventilation, i.e. transverse ventilation or impingement ventilation typically require more drying zones than longitudinal ventilation.

Thus, a typical drying device for building boards comprises a plurality (i.e. more than one, e.g. two, three, four, five, six or, up to 80) of drying zones.

The drying device can further be flanked by a first and/or a second adjusting section. A first adjusting section can be provided upstream of the pre-drying unit, i.e. upstream of the first drying zone of the pre-drying unit. A first adjusting section can moderately adjust the conditions from the conditions outside of the drying device to the conditions in the drying device by e.g. controlling the moisture and/or temperature that surrounds the building board. This adjustment can comprise passive heating e.g. by making use of an exothermic reaction in the building board. A second adjusting section can be provided downstream of the final drying unit, i.e. downstream of the last drying zone of the final drying unit. The second adjusting section can adjust from the conditions in the drying device to the conditions post-drying by e.g. allowing the building board to cool to approximately room temperature.

Each drying zone is supplied by at least one heating means and is supplied by at least one ventilation means. A drying zone typically further comprises a building board input end and an output end and optionally ducts entering or leaving the zone. To increase the capacity of a drying device for building boards, the drying device is usually configured in a plurality of decks such that the various drying zones of the drying units comprise a plurality of decks, wherein each deck comprises a supporting means for the building boards. The supporting means is typically arranged as a conveying means such that a plurality of building boards can pass through the drying device essentially stacked on top of one another in decks or racks. A plurality of decks is preferable, when spatial and energetic requirements are an issue.

In the state of the art, the heating means typically comprise direct heating means such as one or more fossil fuel burners (e.g. natural gas burners,), or indirect heating means such as one or more thermal oil heat exchangers. The heating means can also comprise other direct heating means such as one or more renewable fuel burners (e.g. biogas or hydrogen burners) and/or other indirect heating means such as one or more gas-gas heat exchangers (e.g. air-air or air-steam) or one or more gas-liquid heat exchanger, such air-water, air-thermal oil, air-glycol solution) or one or more radiation elements, all of which are used to heat the gaseous medium such as air, which is then circulated through a drying zone. The terms "gas-liquid" and "liquid-gas" are used interchangeably in terms of this disclosure. Analogously, the order is irrelevant, if one or both of the general terms are specified. For example, "air-water" is meant to denote the same type of heat exchanger as "water-air". Ventilation means can comprise an arrangement of air entry ports and air discharge or suction ports, wherein air movement is created by e.g. ventilation fans. The air entry and discharge ports can be positioned at or close to opposite ends of the drying zone. By providing the air entry port/s essentially opposite to the air discharge port, a directional air movement can be provided in the drying zone. This air movement typically either follows the conveying direction, or is countercurrent or transverse to the conveying direction. Thus, the ventilation means can comprise arrangements for ventilation in the conveying direction of the building boards, also referred to as concurrent longitudinal ventilation, or countercurrent to the direction of travel, also referred to as countercurrent longitudinal ventilation, or transverse to the direction of travel, also referred to as transverse ventilation. Drying zones comprising impingement ventilation, namely impingement heating, or transverse ventilation are frequently shorter than drying zones with (concurrent or countercurrent) longitudinal ventilation. Ventilation (airflow) means can alternatively or additionally comprise nozzle boxes or air jet boxes, which create air jets, for impingement ventilation. It can also be possible to combine different ventilation means in the same drying unit. Drying zones with impingement or transverse ventilation can have a length of e.g. 2 m to 6 m. Drying zones with (concurrent or countercurrent) longitudinal ventilation can have a length of e.g. 30 m to 70 m. Thus, a drying unit could have e.g. 10 to 40 drying zones with impingement or transverse ventilation instead of one drying zone with longitudinal ventilation.

When considering gypsum-based building boards, it can be noted that the setting of gypsum, i.e. the formation of calcium sulphate dihydrate from calcium sulphate hemihydrate, is an exothermic process. This means that a gypsum-based building board enters the drying device with a temperature of about 25 to 45 °C. The gypsum-based board is then heated more or less uniformly to a temperature of approx. 80 to 110°C, preferably to about 90 to 100°C in a first drying unit to accelerate the drying process. Due to the high moisture content of the board at the onset, the board can be dried at relatively high temperatures (e.g. 200°C or higher) without risking calcining the outermost layers of the gypsum board. Calcination leads to brittle edges and, if present, poor adhesion of a liner. The evaporation of the moisture present in the board ensures that the temperature of the gypsum board itself stays below 100 °C. Similar statements can be made for cement, which also sets exothermically. As the moisture content of the board decreases, the cooling effect of the evaporation also diminishes, which is why the final unit typically operates at a lower temperature to avoid calcining the outermost layers of the board.

There have been different approaches to reduce the amount of energy necessary to dry building boards, particularly gypsum-based building boards. Many of these have concentrated on reducing the amount of water in the slurry. Other approaches have included means to reuse the warm exhaust vapour mixture from one drying zone in another drying zone, although this frequently brings about issues of excessive humidity (and possible condensation). Some have also addressed recovering energy from the exhaust vapour mixture by heat exchangers, generally without specifying the necessary steps or explicit features. US 2020/0318903 A1 describes processes and devices for the drying of gypsum building boards, which involve the recovery of heat from a plurality of drying zones of the device via removing exhaust vapour mixture from the drying zones and supplying the mixture with a temperature of 50 to 200°C to a heat recovery exchanger, where the mixture is used to heat fresh air. However, with increased demands for reducing the CO₂ footprint, there remains a continued need for further improvement.

It is therefore the object of the claimed invention to reduce the energy consumption of a drying device for building boards, in particular gypsum-based building boards.

This object is achieved with the method of claim 1 comprising:
- Removing an exhaust vapour mixture from at least one drying zone
- Transferring the exhaust vapour mixture with a temperature of 50°C to 200°C to a heat recovery column
- Passing water and the exhaust vapour mixture through internals of the heat recovery column in a non-co-current flow, wherein the internals are defined in terms of two or more theoretical stages, preferably three to five theoretical stages, more preferably four to five theoretical stages, most preferably four theoretical stages.

An exhaust vapour mixture is understood to be the drying gas, i.e. a gaseous drying medium, such as heated air, along with water evaporated from building boards during the drying process. Typically, the exhaust vapour mixture is a mixture of air and water vapour. This exhaust vapour mixture can be discharged from any of the drying zones of a drying device. Typically, a drying device comprises a plurality of drying units each made up of one or more drying zones and is set-up as described in the introduction. The exhaust vapour mixture can be removed from one drying zone or it can be accumulated from some or all of the drying zones. Condensing heat recovery technology, which can capture latent heat, is more efficient than heat recovery technology, which only captures sensible heat. The exhaust vapour mixture is therefore most useful around its dew point, which typically varies with the moisture content i.e. the water vapour content. The dew point is the temperature to which the water vapour must be cooled to become saturated. When cooled below the dew point, moisture capacity is reduced and airborne water vapour will condense to form liquid water, also known as dew. The dew point is proportional to the moisture content, i.e. when the moisture content is higher, the dew point is higher. At temperatures well above the dew point, only sensible heat can be transferred, i.e. recovered. If the exhaust vapour mixture is not saturated with water when entering the heat recovery column, then the available sensible heat can evaporate the water, i.e. the second heat transfer medium, which was introduced into the column in a non-co-current flow to the exhaust vapour mixture. Energy can thereby essentially be lost in a direct heat exchanger such as a heat recovery column, particularly a condensing heat recovery column. Preferred temperatures of the exhaust vapour mixture are 60°C to 160°C, more preferred 70°C to 100°C. The exhaust vapour mixture is most effective with a moisture content of at least 200 g per kg air, namely dry air, preferably at least 250 g per kg air, more preferably a moisture content of >300 g, e.g. 350 g, to 850 g per kg air, even more preferably >300 g to 600 g per kg air, most preferably >300 g to 650 g per kg air, especially >300 g to 550 g per kg air.

The term "building board" is meant to denote a flat sheet or slab, which is used in construction to assemble walls, floors or ceilings. This type of construction can be referred to as dry-lining or dry construction. Examples of a building board include a gypsum-based building board, a cementitious building board and a clay-based building board. The building board can have a thickness of 6 mm to 60 mm, a width of approximately 0.5 m to 3 m, and/or a length of approximately 0.5 m to 4 m. In terms of this invention, the term building board preferably refers to a building board in a nonfinished state, specifically in a shaped, but not yet dried and/or set state, i.e. the state it would have in the drying device.

The terms "upstream" and "downstream" are used to describe the relative position of two components or features, also sub-processes, in the heat recovery process to one another. Here, the heat recovery begins with the removal of the exhaust vapour mixture from a drying zone. Thus, the removal of the exhaust vapour mixture is upstream of any heat recovery means. The terms "upstream" and "downstream" are also used to describe the relative position of two components or features in the drying process itself. For example, the pre-drying unit is positioned upstream of the main drying unit in relation to the direction of travel of the building boards. Similarly, the main drying unit is positioned upstream of the final drying unit.

A heat recovery column is an example of a heat recovery means. The heat recovery column is a type of direct heat exchanger, where the exhaust vapour mixture directly contacts water, thereby transferring sensible and/or latent heat, preferably latent heat. These columns are most efficient, when they operate in a non-co-current flow, also referred to as non-concurrent flow, i.e. a countercurrent or crosscurrent flow or a combination of both. Countercurrent columns are typically used as scrubbers and for distillation or chromatography purposes. The various purposes have different requirements. Most columns used for heat recovery thus far lack the efficiency to play a paramount role in conserving energy. The heat recovery column for recovering heat from a drying device for building boards preferably has a height of 6 m to 15 m and a footprint, i.e. a base area, of 1.8 m² to 50 m², preferably 4 m² to 20 m². The footprint of the heat recovery column can have any shape, e.g. round or rectangular. Preferably, the heat recovery column is a condensing heat recovery column. A condensing heat recovery column has the advantage that it can recover latent heat.

The term "internals" refers to the internal workings, i.e. the internal structures, of a mechanism or system that are hidden from view. In this disclosure the term "internals" refers to those internal workings that can be defined in terms of theoretical stages. In a heat recovery column without internal structures, water is typically sprayed into the column from above and vapour is fed to the column from below. As the vapour rises, it contacts the falling water. The vapour warms the falling water, and part of the vapour condenses. For more efficiency, the heat recovery columns can have means for increasing the contact between water and vapour, or means for separating the vapour into pressure-temperature equilibria, or both. These means are accomplished by internal structures, which can also be defined in terms of theoretical stages. While each theoretical stage corresponds to a theoretical equilibrium, the actual packed column follows a continuous vapourequilibrium curve. The present invention is possible with internals that are defined in terms of two or more theoretical stages, preferably three to five theoretical stages, more preferably four to five theoretical stages, most preferably four theoretical stages. By separating the exhaust vapour mixture into different temperature equilibria, heat transfer and condensation are optimised. As the exhaust vapour mixture rises, its temperature decreases, because heat is continuously transferred to water. Also, its water content decreases, because part of the water vapour of the exhaust vapour mixture has condensed. At the same time, water trickling down through the column increases in temperature. Because warm air can hold more water vapour than cool air, the topmost separating means is able to effectively extract the remaining moisture content from the exhaust vapour mixture. The theoretical stages of the heat recovery column can also be separated into two heat recovery columns that are arranged in series, preferably directly in series, i.e. end-to-end, without any intervening devices.

Preferably, the water entering the heat recovery column has a temperature of 10°C to 70°C, more preferably 40°C to 60°C. Preferably, the water leaving the heat recovery column has a temperature 10°C to 20°C higher than the water entering the heat recovery column.

In the present invention, the heat recovery column can accommodate 20-300 m³/h water, preferably 100-300 m³/h. A column with a footprint of 2 m² corresponds to a capacity of approximately 20 m³/h. A column with a footprint of 50 m² corresponds to a capacity of approximately 300 m³/h. Values in between can be approximated by interpolation. Due to condensation, excess water is created, which can be purged at 0.5-12 m³/h, preferably 8-15 m³/h. 0.5 m³/h purged water approximately correspond to a capacity of 20 m³/h and 15 m³/h purged water approximately correspond to a capacity 300 m³/h. The purged water can be re-used in the production of building boards.

Preferably, the method to recover heat further comprises a step of cleansing the exhaust vapour mixture (e.g. by wet scrubbing, centrifugal force such as a cyclonic separator, electrostatic precipitation or filtration) prior to passing it through the internals of the heat recovery column. This can be done in order to remove or reduce debris and/or dedust the exhaust vapour mixture and/or purify the exhaust vapour mixture. Exhaust vapour mixture leaving a dryer can comprise debris, such as particles up to a size of approx. 5 mm, e.g. small shreds of paper, fibres (e.g. cellulose or glass), gypsum dust or gypsum particles. Too much debris could eventually clog the internals and/or decrease the efficiency of a heat transfer in the internals. The cleansing step can take place in a separate duct, chamber or column (such as a wet scrubber or wet separator) or it can be comprised in the heat recovery column, where it is positioned in a section upstream of (i.e. below) the internals. Preferably, the cleansing step comprises wet scrubbing with a scrubbing medium, e.g. water, wherein the scrubbing medium is advantageously sprayed into the chamber, column or section. The wet scrubbing can operate in co-current or a non-co-current flow. Co-current flow is preferred, if the cleansing step takes place in a separate column or chamber, because this offers more constructive versatility. If the cleansing step is positioned in a section below the internals of the heat recovery column, then non-co-current flow is preferred. Generally, there will only be a negligible amount of heat transfer during the cleansing step, because the system typically operates at a thermodynamic equilibrium. Advantageously, the scrubbing medium can be cycled to and from the column, chamber or section. The debris will typically be removed from the system.

The method to recover heat from a drying device for building boards can further comprise recovering heat with additional heat recovery means such as a gas-gas heat exchanger, a gas-liquid heat exchanger and/or a heat pump, which can be positioned either upstream or downstream of the heat recovery column. Preferably, the method further comprises the step of passing the exhaust vapour mixture through a heat exchanger, preferably a gas-gas heat exchanger, prior to passing it through the internals of the heat recovery column, preferably also prior to cleansing the exhaust vapour mixture. The gas-gas heat exchanger would thus be positioned upstream of the heat recovery column. Gas in terms of this disclosure is meant to denote a gaseous medium such as e.g. air, steam, water vapour or exhaust vapour mixture as well as the gaseous phase of a working medium. Liquid in terms of this disclosure is meant to denote a liquid medium such as e.g. water, water-glycol solution or thermal oil as well as the liquid phase of a working medium. A gas-gas heat exchanger, such as e.g. an air-air heat exchanger or an air-exhaust vapour mixture heat exchanger, can be used to pre-warm incoming (cooler) ambient air with the (warmer) exhaust vapour mixture. This pre-warmed incoming air can be directed towards any drying zone, where it can be heated further by e.g. additional heat recovery means (such as gas-gas heat exchangers or gas-liquid heat exchangers) or burners. The exhaust vapour mixture can have a temperature of 90°C to 180°C when entering the gas-gas heat exchanger and a temperature of 60°C to 120°C when leaving the gas-gas heat exchanger, particularly if it is positioned upstream of the heat recovery column. Any heat recovery means that are positioned upstream of the heat recovery column can pre-cool the exhaust vapour mixture to a temperature around its dew point. By pre-cooling the vapour to a temperature around its dew point, the available sensible heat of the exhaust vapour mixture can be used effectively prior to entering the heat recovery column. A heat pump can be used to transfer heat from water, that was warmed in the heat recovery column, to a third heat transfer medium. In this respect, the exhaust vapour mixture can be regarded as a first heat transfer medium and the water entering and leaving the heat recovery column can be regarded as a second heat transfer medium. Preferably, the heat pump is positioned downstream of the heat recovery column. A gas-liquid heat exchanger, such as e.g. an air-water heat exchanger, can be used to transfer additional heat from the water leaving the heat recovery column, preferably also leaving the heat pump, to warm e.g. the incoming ambient air before it enters the gas-gas heat exchanger. Preferably, the gas-liquid heat exchanger is positioned in a cycle of water leaving the heat recovery column as warmed water and entering the heat recovery column as cooled water. More preferably, the gas-liquid heat exchanger is positioned between the heat pump and water entering the heat recovery column. Most preferably, it is contemporaneously positioned upstream of the gas-gas heat exchanger.

The heat recovery can be improved with a method that further comprises
- Cycling the water to a heat pump and back to the heat recovery column
- Transferring heat from the water to a third heat transfer medium, present in the heat pump, to heat the third heat transfer medium at least 10°C.

By cycling the water to a heat pump, heat from the water can be used to heat a third heat transfer medium at least 10°C, i.e. increase the temperature of a third heat transfer medium by at least 10°C, more preferably by at most up to 200°C, most preferably by 20°C to 30°C or 30°C to 130°C, preferably 30°C to 80°C, more preferably 30°C to 50°C, depending on the type of heat pump. The third heat transfer medium can be air, water, water vapour, water-glycol solution or thermal oil. Ideally, the temperature of the third heat transfer medium is hereby increased beyond the temperature of the water. Preferably, the second heat transfer medium (water) has a temperature of 50°C to 90°C, preferably 50°C - 80°C when entering the heat pump and a temperature of 30°C to 65°C, preferably 45°C to 60°C when leaving the heat pump.

Preferably, the method comprises passing water and the exhaust vapour mixture through internals defined in terms of theoretical stages, wherein the internals comprise one or more packings, which are sometimes also referred to as a packed beds. The one or more packings or packed beds can be random packings or structured packings. Preferably, the one or more packings are structured packings. Structured packings having a voidage of > 94%, preferably 95% to 99%, more preferably 97% to 99% have been particularly effective. Voidage is defined as the fraction of the total volume, which is free space available for the flow of fluids. Water can wet the surface of the packing, while the exhaust vapour mixture can pass this wetted surface, where a heat as well as a mass transfer can take place. Structured packings typically comprise thin corrugated sheets or gauzes, designed to force fluids on complicated paths. The corrugated sheets can further be perforated and/or embossed. The design is intended to produce a large surface area for contact between the water and the exhaust vapour mixture. Ideally, the voids can be structured such that water blockages are avoided. The structured packings can be made of various materials such as plastics (e.g. polypropylene), metal or ceramics. The material must able to withstand a temperature of at least 70°C. Of the mentioned materials, plastics (e.g. polypropylene) and metal are preferred, mainly for cost-effectiveness. Structured packings offer the following advantages as compared to random packings: higher efficiency given the same column height, reduced liquid hold-up and higher capacity.

Alternatively, or in addition thereto, the structured packings have a specific surface area of 80 m²/m³ to 500 m²/m³, preferably 100 m²/m³ to 200 m²/m³, more preferably 100 m²/m³ to 150 m²/m³.

Alternatively, or in addition thereto, the structured packings can comprise corrugated sheets or crimped sheets (such that the sheets are non-planar with ridges or folds), preferably the corrugated or crimped sheets are oriented at an inclination angle of at least 60°, preferably 70° to 90° with regard to the base of the column i.e. in relation to horizontal. The corrugated or crimped sheets can further be arranged in a plurality of layers, wherein each layer is oriented at 140° to 180° to the layer below. The crimp altitude (or twice the amplitude of the corrugation) can be 15 mm to 35 mm, preferably 18 mm to 30 mm. The angle of the corrugation can be 45° to 60°.

Alternatively, or in addition thereto, the structured packings can comprise channels, preferably the channels are arranged at an inclination angle of at least 60°, more preferably 70° to 90°, with regard to the base of the column i.e. in relation to horizontal. The channels can be formed by corrugated sheets stacked at an offset or stacked with a spacer or distance piece. A steep inclination angle has the advantage, that the surface of the packing is kept relatively clean. The water can pass through the structured packing with sufficient velocity to wash away debris, such as gypsum particles and/or paper particles, and/or other contaminants that could have been present in the exhaust vapour mixture.

Preferably, the heat pump is an absorption heat pump, a compression heat pump or a hybrid heat pump. An absorption heat pump has the advantage that not much electrical energy is needed to run the system. An absorption heat pump typically lifts the temperature by 10°C to 30°C, usually 20°C to 30°C. A compression heat pump has the advantage that the temperature of the third heat transfer medium can be lifted by 30°C to 130°C, preferably 30°C to 80°C, most preferably 40°C to 50°C.

In the case of absorption heat pumps, a lithium bromide or ammonia-water heat pump comprising lithium bromide or ammonia-water, respectively, as an absorber, is preferred. The absorption heat pump can comprise an evaporator unit, a generator unit, an absorber unit and a condenser unit, wherein the evaporator and the absorber units are connected by a passage for vapour and the condenser and the generator units are connected by a passage for vapour. The temperature of the evaporator unit can typically be higher than the temperature of the condenser unit. This arrangement has the advantage the heat pump can be driven by a medium temperature of e.g. 50°C to 90°C.

More preferably, the method comprises cycling the water through the evaporator unit and subsequently through the generator unit of the heat pump and back to the heat recovery column. With this arrangement, water entering the heat pump with a temperature of 50°C to 90°C can be used to heat the third heat transfer medium beyond the temperature of the water. Particularly, the water can heat the third heat transfer medium, which enters the absorber unit with a temperature of 60°C to 90°C by at least 10°C.

The compression heat pump can preferably be a high temperature heat pump, wherein the working medium is heated to a maximum absolute temperature of about 80°C to 130°C, or an ultra high temperature heat pump, wherein the working medium is heated to a maximum absolute temperature of about 130°C to 200°C. Preferably, the compression heat pump uses ammonia, butane or propane, preferably ammonia, as working medium for absolute temperatures of about 80°C to 130°C, or helium or CO₂ for maximum absolute temperatures of about 130°C or greater, e.g. up to 200°C.

The hybrid heat pump, also referred to as compression resorption heat pump, combine technologies of an absorption and compression heat pump. Hybrid heat pumps use a mixture of working media, for example ammonia and water. A hybrid heat pump typically comprises a desorber, a separator, a pump, a compressor, an absorber and an expansion element. Hybrid heat pumps have the advantage that they require less electrical energy while supplying an equally high temperature lift compared to compression heat pumps.

The method to recover heat can further comprise the step of cycling water from the heat recovery column to a gas-liquid heat exchanger upstream of the heat pump, downstream of the heat pump or parallel to the heat pump. For this, a liquid-gas heat exchanger, preferably a water-air heat exchanger, can be positioned upstream or downstream of the heat pump, wherein the heat pump can be any of the mentioned absorption, compression or hybrid heat pumps. The gas-liquid heat exchanger, preferably a water-air heat exchanger, can also be positioned in a cycle parallel to the disclosed heat pump cycle. It is advantageous to position the gas-liquid heat exchanger upstream of the heat pump, if the heat pump cannot process warm water with a temperature of 50°C to 90°C, specifically 60°C to 80°C. This can be the case when using e.g. a compression heat pump with ammonia as working medium. Positioning a gas-liquid heat exchanger downstream of the heat pump can be advantageous for any type of heat pump to recover additional heat from second heat transfer medium (e.g. water). Positioning the gas-liquid heat exchanger in a parallel cycle can be advantageous to conserve (electrical) energy when using compression or hybrid heat pumps. Essentially, the temperature conditions can be optimized for any type of heat pump with a gas-liquid heat exchanger positioned upstream, downstream and/or parallel to the heat pump.

Alternatively, or in addition thereto, the method further comprises the step of heating a drying zone with the third heat transfer medium, preferably the drying zone or drying zones of the pre-drying unit and/or the drying zone or drying zones of the final drying unit. Heating the drying zone or drying zones of the pre-drying and/or the final drying unit with the third heat transfer medium is particularly advantageous, if heat pumps with a relatively low temperature lift (up to approx. 30°C) are used, as these drying units typically operate at a lower temperature compared to the main drying unit. If heat pumps with a relatively high temperature lift of 30°C to 130°C are used, any, some or all drying units can be heated with the third heat transfer medium.

The invention is explained further in the figures. However, it is not intended to limit the scope of the invention and the general teaching by the chosen embodiments in the figures.
- **Fig. 1:**: Schematic diagramme of a heat recovery column and associated cycle
- **Fig. 2:**: Schematic diagramme of a heat recovery column and associated cycle, wherein a heat pump is integrated into the cycle.
- **Fig. 3:**: Schematic diagramme of a heat recovery column and associated cycle, wherein a a heat pump and a liquid-gas heat exchanger are integrated into the cycle.
- **Fig. 4:**: Schematic diagramme of a heat pump with an evaporator unit, a generator unit, an absorber unit and a condenser unit. The feed and return lines of the associated cycles are indicated.
- **Fig. 5:**: Schematic diagramme of a drying device for building boards comprising six drying zones.

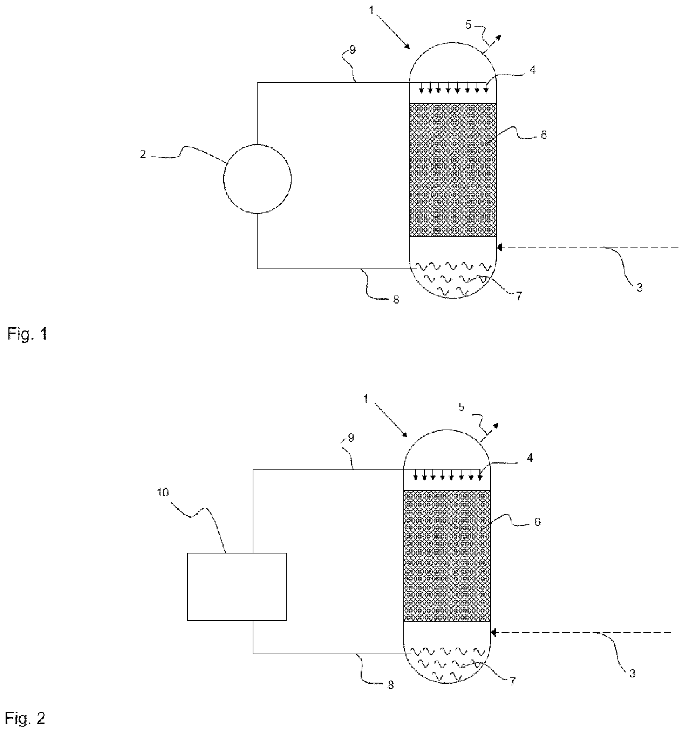

The flow paths of water and an exhaust vapour mixture through a heat recovery column (1) and associated cycle are depicted schematically in **Fig. 1****.** The water trickles downward and spreads over the internals as the exhaust vapour mixture rises. The packing geometries of the internals, such as structured packings, can vary. The heat recovery column can be divided into a top, middle and bottom section for descriptive purposes. The top section comprises a water distributor (4) (such as a water spray nozzle), an air exit duct (5) and a mist eliminator (not shown). The middle section comprises the internals (6) such as structured packings and the bottom section comprises a water collection basin (7) as well as a drain for this basin (8) and a feed duct (3) for the exhaust vapour mixture. The water distributor (4) is positioned at sufficient height from the internals (6) such that the distributed water can wet the surface area of the internals. The internals (6) are dimensioned such that they fit tightly into the main body of the column. The exhaust vapour mixture is circulated through the column using a blower. Ideally, any connecting ducts on the exterior of any heat recovery means are insulated to prevent heat loss to the surroundings. The water collected in the basin (7) is pumped back into the column via an additional means for heat recovery (2) or heat transfer (2). Examples for additional heat recovery or heat transfer means (2) include, but are not limited to one or more liquid-gas heat exchangers, a heat pump, a plurality of radiation elements. The radiation elements can comprise a heat transfer medium circulating in a duct. The flow of water is depicted with solid arrows. The flow of the exhaust vapour mixture is depicted with dashed arrows. A gas-gas heat exchanger (not depicted) can be positioned upstream of the heat recovery column, such that a heat transfer from the exhaust vapour mixture to e.g. incoming ambient air can precede the described heat recovery in the column (1). Although the cleansing step (by for example wet separation with e.g. sprayed water, by centrifugal force such as a cyclonic separator, electrostatic precipitation or by filtration) is not shown, it is not excluded as a further option. This cleansing step can take place in the depicted heat recovery column below, i.e. upstream of, the internals. Alternatively, it can take place in a separate duct, chamber or column (such as e.g. a wet scrubber or wet separator), which would be positioned upstream of the depicted heat recovery column. It is known in the art, that a wet scrubber removes dust particles by capturing them in liquid droplets. It generally operates on the principle of direct contact between a liquid (here: e.g. water) and a gas (here: exhaust vapour mixture).

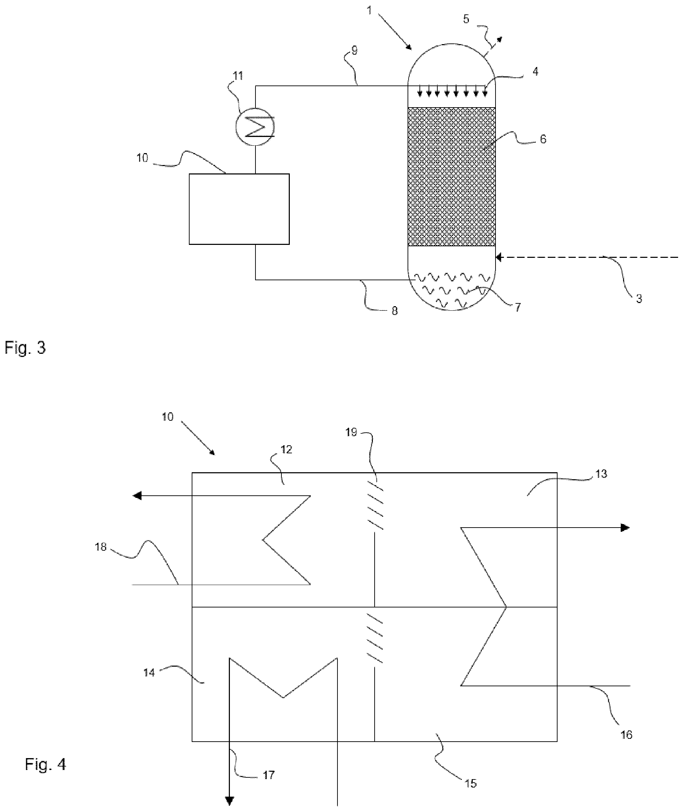

In **Fig. 2****,** a heat pump (10) is integrated into the water cycle from and to the heat recovery column (1). The column is set-up as described for **Fig. 1****.** The heat pump (10) can be a compression heat pump or an absorption heat pump or a hybrid heat pump. The heat pump (10) as shown herein can also symbolise a two-stage heat pump or two serially arranged heat pumps. An example of an absorption heat pump is depicted in **Fig. 4****.**

In **Fig. 3****,** a liquid-gas heat exchanger (11) is integrated into the water cycle from and to the heat recovery column (1) in addition to the heat pump (10). The column is set-up as described for **Fig. 1****.** The heat pump (10) as shown herein can be a compression heat pump, an absorption heat pump, a hybrid heat pump, a two-stage heat pump or two serially arranged heat pumps. An example of an absorption heat pump is depicted in **Fig. 4****.**

**Fig. 4** depicts an example of a heat pump, namely an absorption heat pump, (10) that can be used in combination with the heat recovery column (1). This type of heat pump can increase the temperature of a third heat transfer medium (17) by at least 10°C. The driving energy source is heat. Electrical energy is only necessary for auxiliary devices such as pumps and cooling fans. The depicted heat pump is an absorption heat pump, such as e.g. a lithium bromide heat pump, comprising a condenser unit (12), a generator unit (13), an absorber unit (14) and an evaporator unit (15). Typically, all four units operate at a low pressure, wherein low pressure is meant to denote a pressure below 1 bar. It can also denote a vacuum. The evaporator (15) and the absorber (14) units are connected by a passage for vapour (19) and the condenser (12) and the generator (13) units are connected by a passage for vapour (19). The depicted heat pump comprises three heat transfer media cycles, specifically a cycle for a second heat transfer medium (16), a cycle for a third transfer medium (17) and a cycle for a fourth heat transfer medium (18). When considering the entire heat recovery process, there are additional heat transfer media. For example, the exhaust vapour mixture can also be regarded as a first heat transfer medium, while water passing through the heat recovery column can be regarded as the second heat transfer medium (16). This water can additionally pass through the mentioned heat pump (10). Specifically, it can pass through both the evaporator (15) and generator (13) units as depicted. In the evaporator unit (15), sprayed water is evaporated. The newly produced water vapour passes to the absorber unit (14) and is absorbed by a concentrated lithium bromide salt solution, an exothermic process. The heat produced by this exothermic process is transferred to a third heat transfer medium (17), e.g. liquid water, water vapour, water glycol solution or others. The diluted lithium bromide solution is pumped to the generator unit (13), where it is reconcentrated by the heat given off by the second heat transfer medium (16), water, that is guided through the generator unit. The resulting water vapour, i.e. the steam, is condensed in the condenser unit (12) by means of a fourth heat transfer medium (18). An ammonia absorber heat pump functions analogously.

The heat pump, namely the absorption heat pump, and associated process can be exemplified with temperature ranges. The second heat transfer medium (16), e.g. water, enters the evaporator unit (15) at 70°C ± 10°C and leaves the generator unit (13) at 60°C ± 10°C. The third heat transfer medium (17) enters the absorber unit (14) at 85°C ± 10°C and leaves the same unit at 95°C ± 10°C. The fourth heat transfer medium (18) enters the condenser unit (12) at 26°C ± 10°C and leaves the same unit at 30°C ± 10°C. The temperature range of the fourth heat transfer medium (18) is dependent on the ambient temperature and relative humidity, and therefore differ according to the geographical location.

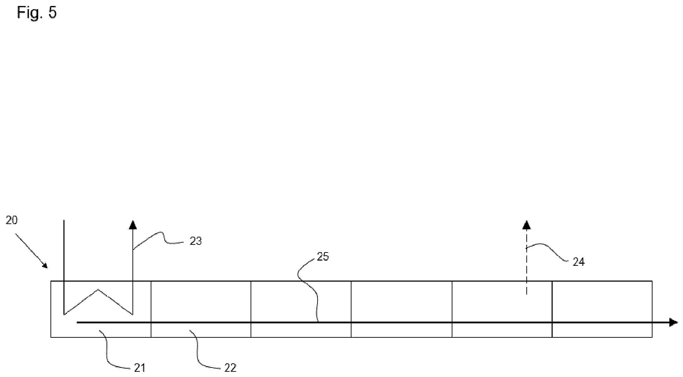

**Fig. 5** schematically depicts an example of a drying device (20) for building boards. The depicted drying device comprises a first drying zone (21), a second drying zone (22) downstream of the first drying zone, a third drying zone (26) downstream of the second drying zone (22), a fourth drying zone (27) downstream of the third drying zone (26), a fifth drying zone (28) downstream of the fourth drying zone (27), a sixth drying zone (29) downstream of the fifth drying zone (28), wherein any one, some or all of the first, second, third, fourth, fifth or sixth drying zone deliver the exhaust mixture to the heat recovery column (1). This is exemplified by the arrow (24) for the fifth drying zone. The depicted zones can be comprised in the pre-drying unit, the main drying unit or the final unit. Any one, some or all of the first, second, third, fourth, fifth or sixth drying zone can receive the third heat transfer medium (17) to dry the building boards in that zone. This is exemplified by the arrow (23) for the first drying zone. It can be particularly useful to circulate the third heat transfer medium through a plurality of radiation elements each comprising a duct for the third heat transfer medium. Alternatively, or in addition thereto, any one, some or all of the first, second, third, fourth, fifth or sixth drying zone can receive or a fifth heat transfer medium, such as air, heated by e.g. a gas-liquid heat exchanger to dry building boards in that drying zone. Although only six drying zones are depicted, **Fig. 5** intends to show that a drying device (20) comprises a plurality of drying zones, up to 80 drying zones. A building board can enter the drying device at an input end of the first drying zone and leave the drying device at an output end of the drying zone with the highest ordinal number. In **Fig. 5** the drying zone with the highest ordinal number is the sixth drying zone. The directional arrow (25) portrays the sequential movement of a building board through the drying device. The inventive drying device could comprise only three, four, five or six drying zones or it could comprise 20 to 80 drying zones, particularly if at least some of the drying zones have impingement and/or transverse ventilation.

### Reference signs

1 heat recovery column
2 heat recovery or heat transfer means
3 feed duct for exhaust vapour mixture
4 water distributor
5 air exit duct/port/outlet
6 internals, e.g. structured packings
7 water collection basin
8 water drain duct
9 water return duct
10 heat pump
11 liquid-gas heat exchanger
12 condenser unit
13 generator unit
14 absorber unit
15 evaporator unit
16 water as second heat transfer medium
17 third heat transfer medium
18 fourth heat transfer medium
19 passage for vapour
20 drying device
21 first drying zone
22 second drying zone
23 heat transfer means, e.g. radiation elements comprising a third heat transfer medium
24 discharged exhaust vapour mixture
25 conveying direction
26 third dying zone
27 fourth drying zone
28 fifth drying zone
29 sixth drying zone

## Claims

1. Method to recover heat from a drying device for building boards, wherein the drying device comprises a plurality of drying zones, the method comprising:
- Removing an exhaust vapour mixture from at least one of the drying zones
- Transferring the exhaust vapour mixture with a temperature of 50°C to 200°C to a heat recovery column (1)
- Passing water and the exhaust vapour mixture through internals (6) of the heat recovery column (1) in a non-co-current flow, wherein the internals (6) are defined in terms of two or more theoretical stages.

2. The method according to claim 1, further comprising
- Cycling the water (16) to a heat pump (10) and back to the heat recovery column (1)
- Transferring heat from the water (16) to a third heat transfer medium (17) in the heat pump (10) to heat the third heat transfer medium at least 10°C.

3. The method according to any of the preceding claims, further comprising the step of cleansing the exhaust vapour mixture prior to passing the exhaust vapour mixture through the internals of the heat recovery column.

4. The method according to any of the preceding claims, further comprising the step of passing the exhaust vapour mixture through a heat exchanger, preferably a gas-gas heat exchanger, prior to passing it through the internals of the heat recovery column, preferably also prior to cleansing the exhaust vapour mixture.

5. The method according to any of the preceding claims, wherein the internals (6) comprise a structured packing, preferably the structured packing has a voidage greater than 94%.

6. The method according to claim 5, wherein the structured packing comprises channels, preferably the channels are arranged at an inclination angle of at least 60°, preferably 75° to 90°, with regard to the base of the column/in relation to horizontal.

7. The method according to any of the preceding claims, further comprising a step of purging excess water from the cycle.

8. The method according to any of the claims 2 to 7, wherein the heat pump (10) is an absorption heat pump comprising an evaporator unit (15), a generator unit (13), an absorber unit (14) and a condenser unit (12), wherein the evaporator (15) and the absorber (14) units are connected by a passage for vapour (19) and the condenser (12) and the generator (13) units are connected by a passage for vapour (19).

9. The method according to any of the claims 2 to 8, further comprising a step of cycling the water (16) through the evaporator unit (15) and subsequently through the generator unit (13) of the heat pump and back to the heat recovery column (1).

10. The method according to any of the claims 2 to 7, wherein the heat pump is a compression heat pump or a hybrid heat pump.

11. The method according to any of the claims 2 to 10, further comprising the step of cycling the water from the heat recovery column to a gas-liquid heat exchanger positioned upstream of the heat pump, downstream of the heat pump and/or in a cycle parallel to the heat pump cycle.

12. The method according to any of the claims 2 to 11, wherein the drying device comprises a pre-drying unit, a main drying unit and a final drying unit, each unit having one or more drying zones, and wherein the method further comprises the step of heating a drying zone of the drying device (20) with the third heat transfer medium (17), preferably some, any or all of the drying zones of the pre-drying unit.

## Patentansprüche

1. Verfahren zur Wärmerückgewinnung aus einer Trocknungsvorrichtung für Bauplatten, wobei die Trocknungsvorrichtung eine Vielzahl von Trocknungszonen umfasst, wobei das Verfahren Folgendes umfasst:
- Abführen eines Abgasdampfgemischs aus mindestens einer der Trocknungszonen
- Überführen des Abgasdampfgemischs mit einer Temperatur von 50 °C bis 200 °C in eine Wärmerückgewinnungssäule (1)
- Leiten von Wasser und dem Abgasdampfgemisch durch Einbauten (6) der Wärmerückgewinnungssäule (1) in einer Nicht-Gleichstrom-Strömung, wobei die Einbauten (6) in Form von zwei oder mehr theoretische Stufen definiert sind.

2. Verfahren nach Anspruch 1, ferner umfassend
- Zirkulieren des Wassers (16) zu einer Wärmepumpe (10) und zurück zu der Wärmerückgewinnungssäule (1)
- Übertragen von Wärme aus dem Wasser (16) auf ein drittes Wärmeübertragungsmedium (17) in der Wärmepumpe (10), um das dritte Wärmeübertragungsmedium um mindestens 10 °C zu erwärmen.

3. Verfahren nach einem der vorhergehenden Ansprüche, ferner umfassend den Schritt des Reinigens des Abgasdampfgemischs vor dem Leiten des Abgasdampfgemischs durch die Einbauten der Wärmerückgewinnungssäule.

4. Verfahren nach einem der vorhergehenden Ansprüche, ferner umfassend den Schritt des Leitens des Abgasdampfgemischs durch einen Wärmetauscher, vorzugsweise einen Gas-GasWärmetauscher, vor dem Leiten desselben durch die Einbauten der Wärmerückgewinnungssäule, vorzugsweise zudem vor dem Reinigen des Abgasdampfgemischs.

5. Verfahren nach einem der vorhergehenden Ansprüche, wobei die Einbauten (6) eine strukturierte Schüttung umfassen, wobei die strukturierte Schüttung vorzugsweise ein Hohlraumvolumen von mehr als 94 % aufweist.

6. Verfahren nach Anspruch 5, wobei die strukturierte Schüttung Kanäle umfasst, wobei die Kanäle vorzugsweise in einem Neigungswinkel von mindestens 60°, vorzugsweise 75° bis 90°, in Bezug zu der Basis der Säule / im Verhältnis zu der Horizontale angeordnet sind.

7. Verfahren nach einem der vorhergehenden Ansprüche, ferner umfassend einen Schritt des Spülens von überschüssigem Wasser aus dem Kreislauf.

8. Verfahren nach einem der Ansprüche 2 bis 7, wobei die Wärmepumpe (10) eine Absorptionswärmepumpe ist, die eine Verdampfereinheit (15), eine Generatoreinheit (13), eine Absorbereinheit (14) und eine Kondensatoreinheit (12) umfasst, wobei die Verdampfereinheit (15) und die Absorbereinheit (14) durch einen Durchlass für Dampf (19) verbunden sind und die Kondensatoreinheit (12) und die Generatoreinheit (13) durch einen Durchlass für Dampf (19) verbunden sind.

9. Verfahren nach einem der Ansprüche 2 bis 8, ferner umfassend einen Schritt des Zirkulierens des Wassers (16) durch die Verdampfereinheit (15) und anschließend durch die Generatoreinheit (13) der Wärmepumpe und zurück zu der Wärmerückgewinnungssäule (1).

10. Verfahren nach einem der Ansprüche 2 bis 7, wobei die Wärmepumpe eine Kompressionswärmepumpe oder eine Hybridwärmepumpe ist.

11. Verfahren nach einem der Ansprüche 2 bis 10, ferner umfassend den Schritt des Zirkulierens des Wassers aus der Wärmerückgewinnungssäule zu einem Gas-Flüssigkeit-Wärmetauscher, der vorgelagert zu der Wärmepumpe, nachgelagert zu der Wärmepumpe und/oder in einem Zyklus parallel zu dem Wärmepumpenzyklus positioniert ist.

12. Verfahren nach einem der Ansprüche 2 bis 11, wobei die Trocknungsvorrichtung eine Vortrocknungseinheit, eine Haupttrocknungseinheit und eine Endtrocknungseinheit umfasst, wobei jede Einheit eine oder mehrere Trocknungszonen aufweist, und wobei das Verfahren ferner den Schritt des Erwärmens einer Trocknungszone der Trocknungsvorrichtung (20) mit dem dritten Wärmeübertragungsmedium (17), vorzugsweise einigen, beliebigen oder sämtlichen der Trocknungszonen der Vortrocknungseinheit, umfasst.

## Revendications

1. Procédé pour récupérer de la chaleur provenant d'un dispositif de séchage pour panneaux de construction, dans lequel le dispositif de séchage comprend une pluralité de zones de séchage, le procédé comprenant :
- l'élimination d'un mélange de vapeurs d'échappement provenant d'au moins l'une des zones de séchage
- le transfert du mélange de vapeurs d'échappement ayant une température de 50 °C à 200 °C vers une colonne de récupération de chaleur (1)
- le fait de faire passer de l'eau et le mélange de vapeurs d'échappement à travers des éléments internes (6) de la colonne de récupération de chaleur (1) dans un écoulement non à cocourant, dans lequel les éléments internes (6) sont définis en termes de deux étages théoriques ou plus.

2. Procédé selon la revendication 1, comprenant en outre
- le fait de faire cycler l'eau (16) vers une pompe à chaleur (10) et de la renvoyer vers la colonne de récupération de chaleur (1)
- le transfert de la chaleur provenant de l'eau (16) vers un troisième milieu de transfert de chaleur (17) dans la pompe à chaleur (10) afin de chauffer le troisième milieu de transfert de chaleur d'au moins 10 °C.

3. Procédé selon l'une quelconque des revendications précédentes, comprenant en outre l'étape consistant à nettoyer le mélange de vapeurs d'échappement avant de faire passer le mélange de vapeurs d'échappement à travers les éléments internes de la colonne de récupération de chaleur.

4. Procédé selon l'une quelconque des revendications précédentes, comprenant en outre l'étape consistant à faire passer le mélange de vapeurs d'échappement à travers un échangeur de chaleur, de préférence un échangeur de chaleur gaz-gaz, avant de le faire passer à travers les éléments internes de la colonne de récupération de chaleur, de préférence également avant de nettoyer le mélange de vapeurs d'échappement.

5. Procédé selon l'une quelconque des revendications précédentes, dans lequel les éléments internes (6) comprennent un garnissage structuré, de préférence le garnissage structuré a une porosité supérieure à 94 %.

6. Procédé selon la revendication 5, dans lequel le garnissage structuré comprend des canaux, de préférence les canaux sont agencés selon un angle d'inclinaison d'au moins 60°, de préférence 75° à 90°, concernant la base de la colonne/par rapport à l'horizontale.

7. Procédé selon l'une quelconque des revendications précédentes, comprenant en outre une étape consistant à purger l'excès d'eau du cycle.

8. Procédé selon l'une quelconque des revendications 2 à 7, dans lequel la pompe à chaleur (10) est une pompe à chaleur à absorption comprenant une unité d'évaporateur (15), une unité de générateur (13), une unité d'absorbeur (14) et une unité de condenseur (12), dans lequel les unités d'évaporateur (15) et d'absorbeur (14) sont reliées par un passage pour vapeur (19) et les unités de condenseur (12) et de générateur (13) sont reliées par un passage pour vapeur (19).

9. Procédé selon l'une quelconque des revendications 2 à 8, comprenant en outre une étape consistant à faire cycler l'eau (16) à travers l'unité d'évaporateur (15), puis à travers l'unité de générateur (13) de la pompe à chaleur, et à la renvoyer vers la colonne de récupération de chaleur (1).

10. Procédé selon l'une quelconque des revendications 2 à 7, dans lequel la pompe à chaleur est une pompe à chaleur à compression ou une pompe à chaleur hybride.

11. Procédé selon l'une quelconque des revendications 2 à 10, comprenant en outre l'étape consistant à faire cycler l'eau de la colonne de récupération de chaleur vers un échangeur de chaleur gaz-liquide positionné en amont de la pompe à chaleur, en aval de la pompe à chaleur et/ou dans un cycle parallèle au cycle de pompe à chaleur.

12. Procédé selon l'une quelconque des revendications 2 à 11, dans lequel le dispositif de séchage comprend une unité de préséchage, une unité de séchage principal et une unité de séchage final, chaque unité comportant une ou plusieurs zones de séchage, et dans lequel le procédé comprend en outre l'étape consistant à chauffer une zone de séchage du dispositif de séchage (20) avec le troisième milieu de transfert de chaleur (17), de préférence certaines, l'une quelconque ou la totalité des zones de séchage de l'unité de préséchage.
